# EUROPÄISCHE PATENTANMELDUNG

(11) **EP 1 647 532 A1**
(43) Veröffentlichungstag der Anmeldung: **19.04.2006**
(21) Anmeldenummer: 04405646.3
(22) Anmeldetag: 15.10.2004
(51) Int. Cl.: C03B 33/03, B65G 49/06

(54) **Transfervorrichtung und Verfahren zum Transferieren von Glasscheiben**

(71) Anmelder: Bystronic Maschinen AG, CH-4922 Bützberg (CH)
(72) Erfinder: Manz, Bernhard, 3360 Herzogenbuchsee (CH); Spitteler, Peter, 4443 Wittinsburg (CH)
(74) Vertreter: AMMANN PATENTANWÄLTE AG BERN

(57) **Zusammenfassung**

Die Transfervorrichtung zum Transferieren einer Glasscheibe umfasst ein verfahrbares Trägerteil (9), an welchem ein Ausleger (10) verfahrbar angeordnet ist. Liegt eine Glasscheibe mit ihrer Unterseite auf einer Auflagefläche einer ersten Station auf, so wird zum Transferieren zu einer zweiten Station der Ausleger unter die Glasscheibe gefahren, angehoben und zusammen mit der auf ihm ruhenden Glasscheibe zur zweiten Station verfahren.

## Beschreibung

Die Erfindung bezieht sich auf eine Transfervorrichtung zum Transferieren von Glasscheiben gemäss Oberbegriff des Vorrichtungsanspruchs 1 und ein Verfahren gemäss Oberbegriff des unabhängigen Verfahrensanspruchs.

Die Herstellung von Glasscheiben mit einer bestimmten Form erfordert mehrere, an verschiedenen Bearbeitungsstationen durchzuführende Arbeitsschritte wie Ritzen, Brechen und Schleifen. Um eine Beschädigung zu vermeiden, ist beim Transfer zwischen den Bearbeitungsstationen eine vorsichtige Handhabung zu gewährleisten, insbesondere dann, wenn die Glasscheiben, wie sie u.a. in Automobilen verwendet werden, mit einer empfindlichen Schicht versehen sind.

Aus der Patentschrift CH-A5-686 572 ist es bekannt, zum Transferieren einer Glasscheibe von der einen Bearbeitungsstation zur nächsten einen verfahrbaren Saugteller zu verwenden, der auf die Oberseite der Glasscheibe anbringbar ist. Da diese beim Bearbeiten in der Regel mit ihrer Unterseite aufliegt, wird die Glasscheibe beim Herstellungsprozess insgesamt sowohl auf der Ober- wie Unterseite berührt. Dies ist besonders nachteilig bei der Bearbeitung von Glasscheiben mit einer beschichteten Oberseite, da diese mit dem Saugteller in Kontakt kommt und eine Beschädigung - wenn auch nur geringe - unvermeidlich ist.

Ausgehend von diesem Stand der Technik liegt der vorliegenden Erfindung die Aufgabe zu Grunde, eine Transfervorrichtung sowie ein Verfahren anzugeben, welche bzw. welches das Transferieren einer Glasscheibe so ermöglicht, dass sie lediglich auf der Seite berührt wird, auf welcher sie bei einer Bearbeitungsstation aufliegt.

Diese Aufgabe wird durch die erfindungsgemässe Transfervorrichtung gemäss Anspruch 1 sowie durch das erfindungsgemässe Verfahren gemäss dem unabhängigem Verfahrensanspruch gelöst. Die weiteren Ansprüche geben bevorzugte Ausführungen an sowie eine Anlage mit einer erfindungsgemässen Transfervorrichtung.

Die Vorrichtung und das Verfahren gemäss der Erfindung haben u.a. den Vorteil, dass beim Transferieren einer Glasscheibe nur diejenige Seite berührt wird, auf welcher sie bei einer Bearbeitungsstation aufliegt. Dies ist besonders vorteilhaft bei einseitig beschichteten Glasscheiben, da beim Transferieren die empfindliche Schicht unberührt bleibt.

Die Erfindung wird im Folgenden anhand eines Ausführungsbeispiels unter Bezugnahme auf Figuren erläutert.
Es zeigen:
Fig. 1 eine perspektivische Ansicht einer erfindungsgemässen Transfervorrichtung;
Fig. 2 eine Vorderansicht der erfindungsgemässen Transfervorrichtung gemäss Fig. 1;
Fig. 3 einen ersten Teil einer Gesamtanlage mit zwei Bearbeitungsstationen und einer erfindungsgemässen Transfervorrichtung gemäss Fig. 1; und
Fig. 4 einen zweiten Teil einer Gesamtanlage mit zwei Bearbeitungsstationen und einer weiteren Ausführungsform der erfindungsgemässen Transfervorrichtung gemäss Fig. 1.

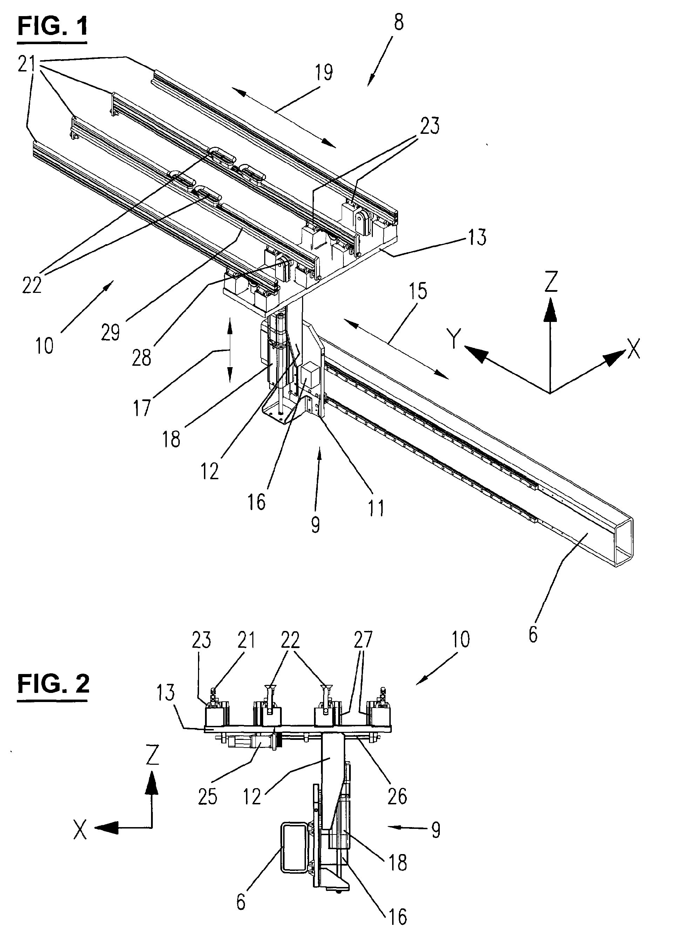

Die in Fig. 1 gezeigte Transfervorrichtung 8 umfasst ein Trägerteil 9 und einen Ausleger 10, der verfahrbar am Trägerteil 9 aufgenommen ist und zum Stützen einer Glasscheibe dient.

Das Trägerteil 9 enthält einen Schlitten 11 mit einem Vertikalträger 12 und einer Querplatte 13. Der Schlitten 11 ist mittels ersten Antriebsmittel 16 entlang einem Trägerbalken 6 verfahrbar. Dadurch ist die Transfervorrichtung 8 als Ganzes in der y-Richtung hin und her verschiebbar, wie dies in der Fig. 1 durch den Doppelpfeil 15 angedeutet ist. Der Vertikalträger 12 mit der Querplatte 13 und dem Ausleger 10 ist am Schlitten 11 in der Höhe verfahrbar aufgenommen, wie dies in der Fig. 1 durch den Doppelpfeil 17 angedeutet ist. Das Einstellen der Höhe erfolgt über zweite Antriebsmittel 18 beispielsweise in Form eines pneumatischen Zylinders.

Der Ausleger 10 erstreckt sich in horizontaler Richtung und umfasst Auslegerelemente 21, welche zum Stützen einer Glasscheibe dienen. Die Auslegerelemente 21 sind horizontal verfahrbar und von balkenähnlicher Form. Fig. 1 zeigt als Beispiel vier Auslegerelemente 21, die nebeneinander angeordnet sind. Je nach Anwendung kann natürlich die Anzahl der Auslegerelemente 21 angepasst sein und zwei oder mehr betragen.

Der Ausleger 10 ist mit Festhaltemitteln 22 ausgerüstet, welche dazu dienen, eine Glasscheibe beim Transferieren festzuhalten. Dadurch wird eine Relativbewegung zwischen Glasscheibe und Ausleger 10 vermieden, sodass sich die Information über die räumliche Position der Glasscheibe aus der Information über die räumliche Position des Auslegers 10 ergibt. Die Transfervorrichtung erlaubt es demnach, einer Bearbeitungsstation die Glasscheibe so zu übergeben, dass diese ohne Neupositionieren bearbeitet werden kann.

Als Festhaltemittel 22 eignen sich z.B. Saugmittel, welche am Ausleger 10 angebracht sind und auf der Unterseite der Glasscheibe mittels Unterdruck festgesaugt werden können. In der in den Figuren 1 und 2 gezeigten Ausführungsform sind die beiden inneren Auslegerelemente 21 mit Festhaltemitteln 22 versehen. Natürlich können Festhaltemittel 22 je nach Anzahl der Auslegerelemente 21 und nach Anwendungszweck der Transfervorrichtung 8 an einem einzelnen Auslegerelement, an mehreren oder an allen Auslegerelementen angebracht sein.

Das Trägerteil 9 umfasst Führungen 23, die an der Querplatte 13 befestigt sind und die Bewegung der Auslegerelemente 21 in horizontaler Richtung, d.h. gemäss Fig. 1 in y-Richtung vorgeben. Die Führungen 23 sind so ausgebildet, dass der Ausleger 10 in Bezug auf das Trägerteil 9 in y-Richtung hin und her verschiebbar ist, wie dies in der Fig. 1 durch den Doppelpfeil 19 angedeutet ist.

Zum Verfahren des Auslegers 10 in y-Richtung umfasst das Trägerteil 9 dritte Antriebsmittel. Wie aus der Fig. 2 ersichtlich, enthalten diese einen Motor 25, der unterhalb der Querplatte 13 befestigt ist und zum Antreiben einer quer zum Ausleger 10 verlaufenden Welle 26 dient. Die Bewegung der Welle 26 wird mittels Zahnriemen 27 auf Ritzel 28 übertragen, die oberhalb der Querplatte 13 angeordnet sind, wobei jeweils ein Ritzel 28 auf eine Zahnstange 29 eines Auslegerelements 21 wirkt. Durch diese Kopplung der Auslegerelemente 21 an den Motor 25 ist gewährleistet, dass sich bei dessen Betätigung die Auslegerelemente 21 synchron in dieselbe Richtung bewegen.

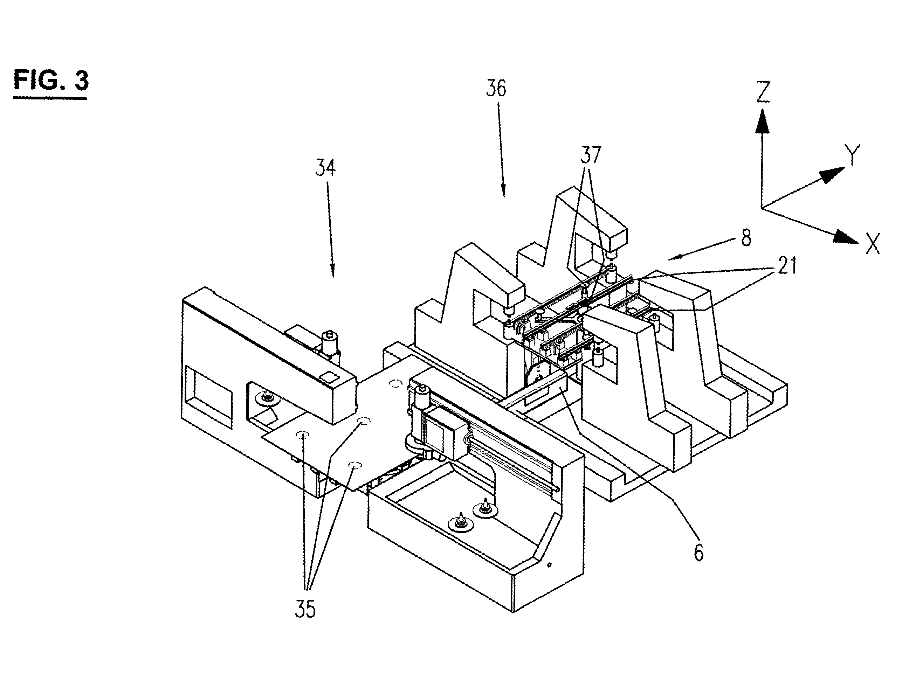

Fig. 3 zeigt ein Beispiel einer Anlage, welche zwei Bearbeitungsstationen 34 und 36 sowie eine dazwischen angeordnete Transfervorrichtung 8 umfasst und welche in einer Gesamtanlage integriert sein kann. Die Bearbeitungsstation 34 ist eine Schleifstation zum Schleifen des Randes einer Glasscheibe, die Bearbeitungsstation 36 ist eine Bohrstation zum Anbringen von Löchern in der Glasscheibe. Die Bearbeitungsstationen 34 und 36 sind mit Stützelementen 35 bzw. 37 versehen, auf welcher eine Glasscheibe bei der Bearbeitung mit ihrer Unterseite aufliegt und welche so angeordnet sind, dass die Auslegerelemente 21 der Transfervorrichtung 8 dazwischengeführt werden können. Zum Festhalten der Glasscheibe während der Bearbeitung sind die Stützelemente 35, 37 zumindest teilweise mit Saugmitteln ausgerüstet.

### Der Transfer einer Glasscheibe erfolgt folgendermassen:

Die Transfervorrichtung 8 wird in Richtung der Bearbeitungsstation 34 - gemäss Fig. 3 in Richtung der negativen y-Achse - bis zum Endbereich des Trägerbalkens 6 verfahren und der Ausleger 10 mittels der dritten Antriebsmittel 25-28 ausgefahren. Dabei bewegen sich die Auslegerelemente 21 relativ zum Trägerteil 9, sodass sie zwischen den Stützelementen 35 hindurchgeführt werden können, ohne jedoch eine darauf liegende Glasscheibe zu berühren. Der Ausleger 10 wird mittels der zweiten Antriebsmittel 18 nach oben verfahren, bis die Festhaltemittel 22 an der Glasscheibenunterseite angebracht werden können. Diese werden festgesaugt, während die Saugmittel der Stützelemente 35 gelöst werden. Der Ausleger 10 wird zusammen mit der Glasscheibe weiter nach oben und anschliessend mittels der dritten Antriebsmittel 25-28 in Richtung der positiven y-Achse verfahren.

Zum Übergeben der Glasscheibe an die Bearbeitungsstation 36 wird in analoger Weise vorgegangen: Verfahren der Transfervorrichtung 8 bis zum Endbereich des Trägerbalkens 6 und Ausfahren des Auslegers 10 mittels der dritten Antriebsmittel 25-28 sowie anschliessendes Absenken des Auslegers 10 und Lösen der Festhaltemittel 22.

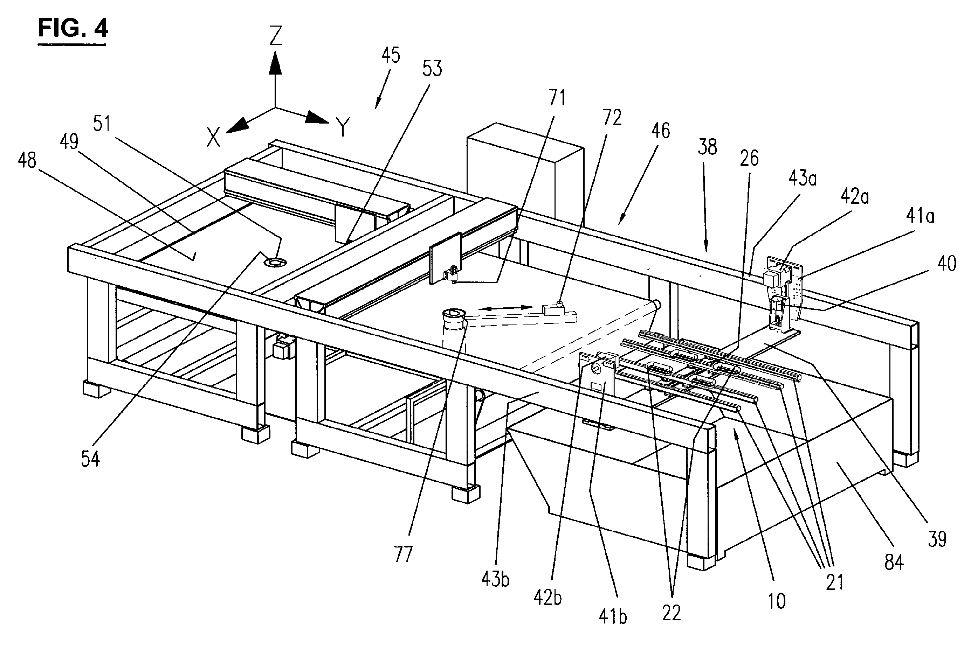

Fig. 4 zeigt eine Anlage, welche in einer Gesamtanlage integriert sein kann und welche eine zweite Ausführungsform 38 der Transfervorrichtung enthält, wobei gleiche Teile mit gleichen Bezugszeichen versehen sind. Im Wesentlichen unterscheiden sich die Trägerteile der beiden Transfervorrichtungen 8 und 38. Bei der Transfervorrichtung 38 gemäss Fig. 4 ist die Querplatte 39, an welchem der Ausleger 10 verfahrbar aufgenommen ist, an beiden Endseiten über vierte Antriebsmittel 40 jeweils mit einem Schlitten 41a bzw. 41b verbunden. Die vierten Antriebsmittel 40 dienen dazu, den Ausleger 10 in der Höhe zu verstellen und sind z.B. in Form von pneumatischen Zylindern ausgebildet. Der Schlitten 41a bzw. 41b enthält fünfte Antriebsmittel 42a bzw. 42b, sodass er geführt durch die Trägerbalken 43a, 43b in y-Richtung verfahrbar ist.

Die Anlage gemäss Fig. 4 dient zum Schneiden und Brechen einer Glasscheibe und ist z.B. vorangehend zur Anlage gemäss Fig. 3 in einer Gesamtanlage angeordnet, die zur Herstellung von Glasscheiben bestimmter Form dient, wie sie insbesondere in Automobilen verwendet werden. Die Anlage gemäss Fig. 4 umfasst eine Schneidstation 45 mit einem verfahrbaren Schneidkopf 53 und einem Sauger 54, eine anschliessende Brechstation 46 mit einer Brechvorrichtung 71, 72 und mit einem in der Höhe verstellbaren Sauger 77 sowie ein endloses Förderband 49. Dieses dient einerseits als Auflagefläche 48 für die zu bearbeitende Glasscheibe. Andererseits ist die Oberseite 48 des Förderbandes 49 in y-Richtung verfahrbar, sodass die Glasscheibe von der Schneidstation 45 zur Brechstation 46 und anschliessend die abgebrochenen Glasscherben von der Brechstation 46 zu einem Auffangbehälter 84 transportiert werden können.

Für die Bearbeitung wird die rohe Glasscheibe auf das Förderband 49 bei der Schneidstation 45 gelegt und während sie durch den Sauger 54 festgehalten wird, mittels des Schneidkopfs 53 mit Ritzlinien gemäss der gewünschten Scheibenform versehen. Anschliessend wird durch Verfahren des Förderbandes 49 die geritzte Glasscheibe zur Brechstation 46 befördert, wo mittels der Brechvorrichtung 71, 72 der Rand der Glasscheibe abgebrochen wird. Der herausgebrochene Nutzteil der Glasscheibe wird mittels des Saugers 77 nach oben bewegt, sodass sich ein Zwischenraum zwischen der Glasscheibenunterseite und der Auflagefläche 48 des Förderbandes 49 bildet. Die Transfervorrichtung 38 wird zur Brechstation 46 hin verfahren und der Ausleger 10 relativ zur Querplatte 39 ausgefahren. Diese wird angehoben, die Festhaltemittel 22 an der Glasscheibenunterseite angebracht und der Sauger 77 gelöst. Durch Verfahren des Auslegers 10 sowie der Transfervorrichtung 38 insgesamt wird die Glasscheibe an das Ende der Anlage verschoben, wo sie einer weiteren Station, beispielsweise der Schleifstation 34 übergeben werden kann.

Die Transfervorrichtung sowie das Verfahren gemäss der Erfindung haben den Vorteil, dass beim Transferieren die Oberseite einer Glasscheibe unberührt bleibt. Dies ist besonders vorteilhaft, wenn die Oberseite mit einer Schicht versehen ist, die nicht verletzt werden darf. So eignet sich die Transfervorrichtung sowie das Verfahren gemäss der Erfindung insbesondere zur Bearbeitung von beschichteten Glasscheiben, beispielsweise Automobilscheiben.

## Patentansprüche

1. Transfervorrichtung zum Transferieren einer Glasscheibe mit einem verfahrbaren Trägerteil, **gekennzeichnet durch**
einen Ausleger (10), welcher verfahrbar am Trägerteil (9, 39) angeordnet ist.

2. Vorrichtung gemäss Anspruch 1, **dadurch gekennzeichnet, dass** der Ausleger (10) in der Höhe verfahrbar ist und vorzugsweise in zwei entgegengesetzten Richtungen (19) ausfahrbar ist.

3. Vorrichtung gemäss einem der Ansprüche 1 bis 2, **dadurch gekennzeichnet, dass** der Ausleger (10) Festhaltemittel (22), insbesondere Saugmittel, umfasst.

4. Vorrichtung gemäss einem der Ansprüche 1 bis 3, **dadurch gekennzeichnet, dass** der Ausleger (10) horizontal verfahrbare Auslegerelemente (21) umfasst.

5. Vorrichtung gemäss einem der Ansprüche 1 bis 4, **dadurch gekennzeichnet, dass** das Trägerteil (8) Antriebsmittel (25, 26, 27, 28) umfasst zum synchronen Verfahren der Auslegerelemente.

6. Anlage mit mindestens zwei Stationen und einer dazwischen angeordneten Vorrichtung gemäss einem der Ansprüche 1 bis 5, wobei
vorzugsweise mindestens einer der beiden Stationen (46; 34, 36) Hebemittel zum Heben (77) einer Glasscheibe und/oder Stützelemente (35, 37) umfasst, die so angeordnet sind, dass der Ausleger (10) dazwischengeführt werden kann.

7. Anlage gemäss Anspruch 6, wobei eine der beiden Stationen eine Schleifstation (34) ist und die andere Station eine Brechstation (46) oder eine Bohrstation (36).

8. Verfahren zum Transferieren einer Glasscheibe von einer ersten Station (34; 46) mit einer Auflagefläche (35; 48), auf welcher die Glasscheibe mit ihrer Unterseite aufliegt, zu einer zweiten Station (36; 34), **dadurch gekennzeichnet, dass**
die Glasscheibe an der ersten Station übernommen wird, indem ein Ausleger (10) unter die Glasscheibe gefahren und angehoben wird, und der Ausleger zusammen mit der auf ihm ruhenden Glasscheibe zur zweiten Station verfahren wird.

9. Verfahren gemäss Anspruch 8, **dadurch gekennzeichnet, dass** die Glasscheibe beim Verfahren unverrückbar am Ausleger (10) festgehalten wird.

10. Verfahren gemäss einem der Ansprüche 8 bis 9, **dadurch gekennzeichnet, dass** die Glasscheibe in horizontaler Lage übernommen und verfahren wird und dass
vorzugsweise die Richtung (19), in welche der Ausleger (10) bei der ersten Station (34; 46) ausgefahren wird, im Wesentlichen parallel zur Verfahrrichtung ist, in welche der Ausleger zusammen mit der Glasscheibe verfahren wird.

11. Verfahren gemäss einem der Ansprüche 8 bis 10, **dadurch gekennzeichnet, dass** die Glasscheibe an der ersten Station (46) angehoben wird, bevor der Ausleger (10) unter die Glasscheibe gefahren wird.
